# EUROPÄISCHE PATENTSCHRIFT

(11) **EP 1 803 356 B1**
(45) Veröffentlichungstag und Bekanntmachung des Hinweises auf die Patenterteilung: **22.10.2008**
(21) Anmeldenummer: 06026670.7
(22) Anmeldetag: 22.12.2006
(51) Int. Cl.: A23G 1/20, A23G 3/02, A23G 3/20, A23G 3/22

(54) **Vorrichtung zum Entfernen von Masse im Bodenbereich von Warenstücken**
Device for removing bulk in the floor area of products
Dispositif destiné au retrait de la masse dans la zone de plancher de pièces de marchandises

(30) Priorität: 29.12.2005 DE 102005062893
(43) Veröffentlichungstag der Anmeldung: 04.07.2007
(73) Patentinhaber: Sollich KG, 32105 Bad Salzuflen (DE)
(72) Erfinder: Bäumer, Volker, 32108 Bad Salzuflen (DE)
(74) Vertreter: Rehberg Hüppe + Partner

(56) Entgegenhaltungen:
- DE-C- 440 677
- DE-C- 527 751
- DE-C1- 4 322 414

## Beschreibung

Die Erfindung bezieht sich auf eine Vorrichtung zum Entfernen von schmelzflüssiger Masse, insbesondere Schokolademasse, im hinteren Bodenbereich von Warenstücken, mit einer im Spaltbereich zwischen zwei aneinander anschließenden Förderbändern über die Arbeitsbreite reichenden, angetriebenen Welle. Unter der Welle kann ortsfest und etwa vertikal angeordnet ein beheiztes Abstreifblech vorgesehen sein, auf dem die Welle abgestützt ist und welches die Welle von der übernommenen Masse reinigt. Beim Überziehen von Warenstücken, wie beispielsweise Müsliriegel, Gebäckstücke, Pralinen und dergleichen, wird die schmelzflüssige Überzugsmasse in einer Überziehmaschine, sei es allein von oben, sei es unter Mitverwendung eines Bodenwalls oder dergleichen auf die Warenstücke aufgebracht. Das im Bereich der Überziehmaschine angeordnete Förderband ist als Gitterband ausgebildet, damit der Großteil der im Überschuss verwendeten Masse von dem Warenstück ablaufen und durch das Gitterband hindurchtreten kann, damit es im Kreislauf der Überziehmaschine weiter gefördert wird. An das auslaufseitige Ende des Förderbands der Überziehmaschine schließt sich ein weiteres Förderband an, welches vorzugsweise das Transportband eines Kühlkanals sein kann, der letztlich dazu dient, die Überzugsmasse auf dem Warenstück gänzlich in den festen Zustand zu überführen und zu kühlen. Die Erfindung lässt sich überall dort anwenden, wo mit schmelzflüssiger Masse gearbeitet wird, also z. B. auch an Dekoriermaschinen.

Im Bereich des Übertritts der Warenstücke von dem ersten Förderband auf das nachgeschaltete zweite Förderband befindet sich ein Teil der Masse noch in schmelzflüssigem bzw. bildsamem Zustand. Da zwischen zwei aneinander anschließenden Förderbändern immer ein Spaltbereich vorgesehen sein muss, bilden sich insbesondere in diesem Spaltbereich im hinteren Bodenbereich der Warenstücke, also entgegengerichtet zur Förderrichtung der Warenstücke, aus der Masse Grate oder Schwänze, die eine ausgefranste Kante des Warenstückes bilden, so dass die Bodenkante des überzogenen Warenstücks umlaufend nicht die gleiche Gestalt besitzt. Die hintere ausgefranste Kante mit den Graten und Schwänzen bietet nicht nur ein unschönes Aussehen, sondern stört auch die Weiterverarbeitung der Warenstücke. Zunächst besteht die Gefahr, dass ein Teil dieser Grate auf dem oder den nachfolgenden Förderbändern abbricht, wodurch im Dauerbetrieb eine Verschmutzung dieser Förderbänder stattfindet. Aber auch in nachgeschalteten Verpackungsmaschinen können sich diese Grate als hinderlich erweisen.

### STAND DER TECHNIK

Um dem aufgezeigten Problem zu begegnen und einen Teil der schmelzflüssigen Masse, aus dem sich die Grate oder Schwänze nach der Erstarrung dieser Masse bilden würden, im Spaltbereich zwischen zwei aneinander anschließenden Förderbändern zu entfernen, ist eine Vorrichtung der eingangs beschriebenen Art aus der DE-PS 4 40 677 bekannt. Die dabei eingesetzte Welle besteht aus Vollmaterial mit kleinem Außendurchmesser. Sie ist im Spaltbereich meist mit geringfügigem Abstand unterhalb der durch die Oberfläche der beiden aneinander anschließenden Förderbänder gebildeten Förderbahn angeordnet. Außerhalb der Arbeitsbreite ist die Welle in Lagern gelagert, die die Welle aufnehmen. Die Welle wird mit einer Drehzahl in der Größenordnung von etwa 1.000 min⁻¹ angetrieben. Die die Grate oder Schwänze bildende Masse gelangt aufgrund der Schwerkrafteinwirkung im Spaltbereich etwas tiefer als die Förderebene, so dass dieser Teil der Überzugsmasse mit der Oberfläche der Welle in Kontakt kommt und mitgenommen wird. Es findet praktisch ein Abreißvorgang in schmelzflüssigem bzw. bildsamem Zustand statt, wobei der abgerissene Teil der Masse von der Welle aufgewickelt bzw. mitgenommen wird.

Bei relativ großen bzw. langen Warenstücken, wie etwa Riegel oder Kekse, ist die bekannte Vorrichtung mit guter Wirkung anwendbar. Da wegen der Länge der Warenstücke in Förderrichtung die Breite des Spalts zwischen zwei aneinander anschließenden Förderbändern nicht allzu klein gewählt werden muss, ergibt sich die Möglichkeit, auch den Durchmesser der Welle relativ groß wählen zu können, wodurch die Welle auch bei relativ schnellem Antrieb um ihre Achse eine ausreichende Stabilität erhält. Dies ist insbesondere bei kleinen Arbeitsbreiten, also etwa unterhalb 600 mm, ohne weiteres der Fall. Bei größeren Arbeitsbreiten und insbesondere bei in Förderrichtung vergleichsweise kurzen Warenstücken, wie etwa Weinbrandbohnen oder - kirschen, muss die Spaltbreite zwischen zwei aneinander anschließenden Förderbändern ohnehin sehr klein gewählt werden, damit die kurzen Warenstücke den Spaltbereich ordnungsgemäß passieren können. Wird dann noch zusätzlich die Arbeitsbreite der Vorrichtung groß gewählt, also etwa in der Größenordnung zwischen 1.000 und 2.000 mm, dann treten Probleme auf. An der dann notwendigerweise einen kleinen Durchmesser aufweisenden Welle, die relativ lang ausgebildet sein muss, treten Schwingungen auf. Die Welle neigt zum Flattern und zum Abheben, und die Funktion ist nicht mehr gegeben. Diese Gefahr besteht insbesondere im Mittelbereich einer langen Welle. Die beabsichtigte Wirkung des Entfernens der Grate im hinteren Bodenbereich tritt dann dort nicht mehr ein.

Die Welle selbst kann auf einem ortsfest angeordneten und etwa vertikal ausgerichtet vorgesehenen beheizten Abstreifblech abgestützt sein, wobei das Abstreifblech gegenüber der Welle so angestellt ist, dass eine Übergabe der abgenommenen Masse von der Welle auf das Abstreifblech stattfindet. Durch die Beheizung des Abstreifblechs und die dadurch hervorgerufene Wärmeentwicklung, die sich auch auf die Welle auswirkt, verbleibt die übernommene Masse in flüssigem Zustand, kann somit in Schwerkraftrichtung ablaufen und in den Kreislauf der Überzugsmaschine zurückgeführt werden. Durch das Abstreifblech wird die Oberfläche der Welle kontinuierlich von Masse gereinigt.

Um dem Flattern, Abheben und Verlaufen der Welle relativ zum Abstreifblech zu begegnen, ist es bekannt, in Abständen über die Arbeitsbreite Lageraugen, Klammern, Drahtschlingen oder dergleichen vorzusehen, die die Welle zumindest teilweise umgreifen und zusätzliche örtliche Lager für die Welle innerhalb des Arbeitsbereichs darstellen. Außer diesen zusätzlichen Lagern ist die Welle vorzugsweise in zwei Endlagern im Bereich jedes ihrer Enden noch gelagert, wobei sich diese Endlager außerhalb der Arbeitsbreite der Förderbänder befinden. Die Lageraugen, Klammern oder dergleichen führen in nachteiliger Weise dazu, dass entweder der Abstand der beiden Förderbänder im Spaltbereich vergrößert oder der Durchmesser der Welle entsprechend verkleinert werden muss. Wenn die Lageraugen, Klammern oder dergleichen die Welle auch auf ihrer Oberseite, also der Förderbahn zugekehrt, übergreifen, ist es nur noch begrenzt möglich, die Welle relativ nahe an die Oberseite der Förderbahn und das Ende und den Anfang der beiden Förderbänder heranzurücken. Es ergibt sich ein konstruktiv notwendiger Abstand in vertikaler und horizontaler Richtung, was zur Folge hat, dass vergleichsweise kurze Grate oder Schwänze schmelzflüssiger Masse von der Welle nicht mehr ergriffen werden. Der Hauptnachteil solcher Lageraugen, Klammern oder dergleichen besteht jedoch darin, dass sich an ihnen Masse aufbauen kann, die den Boden von solchen Warenstücken verschmiert und beeinträchtigt, die die Förderbänder im Bereich der Anordnungsstelle der Lageraugen passieren. Wenn die Überziehmaschine nur für ein einziges Produkt ausgelegt und bestimmt ist, bei dem die Warenstücke in örtlich festgelegten Reihen ausgetragen werden, besteht die Möglichkeit, die Lageraugen zwischen den Reihen der Warenstücke anzuordnen. Bei der Verarbeitung von wechselnden Produkten in der Überziehmaschine entfällt diese Möglichkeit. Auch muss immer wieder damit gerechnet werden, dass selbst vorgegebene Reihen von Warenstücken seitlich verlaufen, so dass die Warenstücke dann dennoch mit den Lageraugen in Kontakt kommen können. In dem Bereich, in welchem die Lageraugen an der Welle wirksam sind, verliert die Welle ihre Abnahmefunktion, oder diese ist doch stark beeinträchtigt. Weiterhin ist nachteilig, dass die Lageraugen, Klammern oder dergleichen, die auf dem Abstreifblech ortsfest gelagert und angeordnet sein können, wegen der beschriebenen Verhältnisse sehr dünnwandig ausgebildet sein müssen. Sie stellen daher Teile dar, die einem schnellen Verschleiß unterliegen und des öfteren ersetzt werden müssen. Insbesondere dann, wenn diese Lageraugen ösenartig geschlossen sind, ist das einfache Auswechseln der Welle und/oder der Lageraugen nur durch eine umfangreiche Demontage- und Montagearbeit zu erreichen, während der die Überziehmaschine nicht zur Produktion genutzt werden kann. Insbesondere schnell umlaufend angetriebene Wellen erhalten beim normalen Betrieb, insbesondere aber dann, wenn Fremdkörper in den Bereich zwischen Welle und Abstreifblech gelangen, einen Schlag, der die Welle so verformt, dass sie unbrauchbar wird und ausgetauscht werden muss. Nur in ganz seltenen Fällen kann eine Welle mit Schlag durch einen Richtvorgang außerhalb der Überziehmaschine in einen wiederverwendbaren Zustand überführt werden. In der Regel müssen die Wellen gegen neue Wellen ausgetauscht werden. Auch dieser Austausch stellt eine erhebliche Zeit in Anspruch nehmende Reparatur dar, bei der zumindest die beiden außerhalb der Arbeitsbreite befindlichen Endlager ausgebaut werden müssen, um die Welle überhaupt zugänglich zu machen.

Aus der DE 43 22 414 C1 ist eine Vorrichtung zum Entfernen schmelzflüssiger Masse, insbesondere Schokolademasse, im hinteren Bodenbereich von Wartenstücken bekannt. Im Spaltbereich zwischen zwei aneinander anschließenden Förderbändern ist eine über die Arbeitsbreite reichende angetriebene Welle aus Vollmaterial vorgesehen. Unter der Welle ist ortsfest und etwa vertikal ausgerichtet ein beheiztes Abstreifblech angeordnet. Die Welle ist auf dem Abstreifblech abgestützt und wird von diesem von der übernommenen Masse gereinigt.

Die Welle ist auf dem Abstreifblech durch magnetische Kräfte gehalten und gelagert. Damit wird nicht nur eine Abstützfunktion der Welle auf dem Abstreifblech erreicht, sondern es wird ein mehr oder weniger kontinuierliches, über die Arbeitsbreite reichendes Lager für die Welle auf dem Abstreifblech geschaffen. Durch die magnetische Anziehung zwischen Welle und Abstreifblech ist ferner sichergestellt, dass die Welle gegenüber dem Abstreifblech angestellt ist und das Abstreifblech bei dem Umlauf der Welle um ihre Achse seine Abstreif- und Reinigungsfunktion für die Welle erfüllen kann. Die magnetischen Kräfte können sich allerdings auch bis in den Bereich der Umlenkstellen der beiden Förderbänder auswirken und Anziehungs- und Abstoßeffekte zwischen der Welle und den Förderbändern auslösen, die zu einer nachteiligen Verlagerung der Welle führen können. Um dies zu verhindern, darf ein Minimalabstand nicht unterschritten werden. Auch der Außendurchmesser der Welle kann nicht so klein gewählt werden, wie dies für kleine Warestücke an sich wünschenswert ist.

### AUFGABE DER ERFINDUNG

Der Erfindung liegt die Aufgabe zugrunde, eine Vorrichtung der eingangs beschriebenen Art so weiterzubilden, dass die beschriebenen Probleme weitgehend beseitigt sind und die Vorrichtung auch bei kurzen Warenstücken, also entsprechend kleiner Spaltweite und auch bei großen Arbeitsbreiten, insbesondere im Bereich zwischen 1.000 und 2.000 mm, mit zuverlässiger Arbeitsweise eingesetzt werden kann.

### LÖSUNG

Erfindungsgemäß wird dies bei einer Vorrichtung der eingangs beschriebenen Art dadurch erreicht, dass die Welle als Hohlwelle ausgebildet ist, die im Bereich der Arbeitsbreite von innen gelagert ist.

### BESCHREIBUNG DER ERFINDUNG

Während bisher alle Wellen, mit denen schmelzflüssige Masse im hinteren Bodenbereich von Warenstücken zwischen zwei aneinander anschließenden Förderbändern entnommen wurden, als Vollwellen, also mit kreisförmigem Querschnitt, ausgebildet waren, wird hier erstmals eine Hohlwelle, ein Rohr, also mit kreisringförmigem Querschnitt, eingesetzt. Ein solches Rohr weist nicht nur eine gegenüber einer Vollwelle verbesserte Stabilität auf. Die Hohlwelle ist auch gegen Flattern, gegen Knickung und gegen den Aufbau von Schwingungen vergleichsweise weniger anfällig. Durch den Einsatz einer Hohlwelle bzw. eines Rohrs besteht erstmals die Möglichkeit, den freien Querschnitt der Hohlwelle für die Unterbringung einer Lagerung zu nutzen, die von innen dann sehr Platz sparend an der Welle angreift. Damit tritt zugleich der erhebliche Vorteil auf, dass die Welle über die Arbeitsbreite der Maschine von innen abgestützt und gelagert ist. Damit entfallen über die Arbeitsbreite nach außen vorstehende Teile, so dass die Oberfläche des Rohres sehr nahe an die Umlenkstellen der beiden Förderbänder herangerückt werden kann. Dies schließt nicht aus, dass außerhalb der Arbeitsbreite bekannte zusätzliche Lager Anwendung finden, die die Hohlwelle aufnehmen, also nach außen übergreifend angeordnet sind. Innerhalb der Arbeitsbreite wird jedoch die Abstimmung der Dimensionierung der Hohlwelle und des Lagerelements so getroffen, dass die Welle einen sehr kleinen Außendurchmesser aufweisen kann, der in der Größenordnung von 3 mm oder sogar noch weniger betragen kann. Damit wird es wiederum möglich, das Ende des vorangehenden Förderbands und den Anfang des nachfolgenden Förderbands sehr dicht aneinander zu rücken, so dass die neue Vorrichtung insbesondere für kleine Warenstücke, beispielsweise Minipralinen, besonders geeignet ist. Ein bedeutsamer Vorteil der von innen gelagerten Hohlwelle ist in gewissen Rückstellvermögen bzw. einer Rückstellneigung zu sehen. Zwar kann auch hier ein von dem Warenstück abgebrochener Kekskrümel, ein Nusssplitter oder dergl. sich unter Keilwirkung in den Spalt zwischen Welle und Abstreifblech einlagern und damit dazu führen, dass die Welle bereichsweise ihren vorgesehenen Sitz relativ zum Abstreifblech verlässt. Bei Halterung der Welle mit magnetischen Kräften, wie im Stand der Technik, werden diese Kräfte mit Verlassen des vorgesehenen Sitzes geringer. Bei der neuen von innen gelagerten Hohlwelle werden diese Kräfte mit Verlassen des vorgesehenen Sitzes größer. Die Hohlwelle wird also gleichsam automatisch in ihren vorgesehenen Sitz zurückgeführt.

In der Regel ist die von innen gelagerte Hohlwelle Bestandteil einer Vorrichtung, insbesondere einer Überziehmaschine, einer Dekoriermaschine oder dergl.. Die Hohlwelle ist dann hinter der Umlenkwalze für ein Förderband der Maschine mit geringem Abstand angeordnet, so dass im Anschluss an die hintere Umlenkwalze ein Spaltbereich gebildet wird, wie er für das ordnungsgemäße Entfernen der schmelzflüssigen Masse im hinteren Bodenbereich von Warenstücken erforderlich ist. Die Hohlwelle kann aber auch Bestandteil einer nachfolgenden Vorrichtung, insbesondere eines Kühlkanals, sein. Sie ist dann vor der vorderen Umlenkwalze für das Förderband des Kühlkanals oder eines der Überziehmaschine nachgeordneten Förderbandes angeordnet, so dass sich der Spaltbereich vor der Hohlwelle bildet. Schließlich lässt sich die Hohlwelle auch bei einer Anlage einsetzen, z.B. als separates Element. Die Hohlwelle ist dann im Spaltbereich zwischen zwei aneinander anschließenden Förderbändern gelagert.

Im freien Querschnitt der angetriebenen Hohlwelle kann ein Lagerelement angeordnet sein, das sich zumindest über die Arbeitsbreite des freien Querschnitts hindurcherstreckt. In der Regel wird sich das Lagerelement auch noch außerhalb der Arbeitsbreite der Vorrichtung erstrecken und dort vorgesehene Lager und insbesondere auch den Antriebsmotor durchdringen. Es können auch mehrere Lagerelemente im freien Querschnitt der Hohlwelle vorgesehen sein, die miteinander in Verbindung stehen. Dies gilt für axiale und/oder radiale Richtung.

In der Regel genügt es, wenn das Lagerelement ortsfest angeordnet ist, wobei zwischen dem Lagerelement und der Hohlwelle ein für die Drehbewegung der Hohlwelle relativ zu dem ortsfesten Lagerelement erforderliches Spiel vorgesehen ist. Es können weitere Maßnahmen vorgesehen sein, um die Reibung zwischen Lagerelement und Hohlwelle zu reduzieren.

Es ist sinnvoll, wenn das Lagerelement unter Zugspannung gehalten ist. Je nach der Ausbildung des Lagerelements im Einzelnen dient die Zugspannung dazu, das Lagerelement auszustraffen und gestreckt zu halten, damit es seinerseits seine Führungsfunktion für die sich drehende Hohlwelle erbringen kann. Als Lagerelement kann ein Lagerstab, ein Draht oder ein Drahtseil, jeweils aus Metall und/oder Kunststoff vorgesehen sein. Auch Lagerelemente aus einer Seele, die umwickelt oder umsponnen ist, können eingesetzt werden. Dabei besteht sogar die Möglichkeit, dass die Seele insbesondere zur Aufnahme der Zugspannung ausgebildet ist, während die Umwicklung auf eine möglichst geringe Reibung zwischen Lagerelement und dem inneren Umfang der Hohlwelle abgestimmt ist.

Die Hohlwelle mit dem Lagerelement kann mit und ohne beheiztes Abstreifblech eingesetzt werden. In der Regel wird ein solches beheiztes Abstreifblech jedoch vorgesehen sein, um die Hohlwelle einerseits zusätzlich aufzunehmen und zu führen. Andererseits erbringt das Abstreifblech eine Reinigungswirkung, indem es die von der Hohlwelle übernommene Masse abführt.

Die Hohlwelle kann mit ihrem Lagerelement höhenverstellbar gelagert sein. Auch eine Einstellmöglichkeit in Bandlaufebene kann vorgesehen sein, um die jeweiligen Abstände optimal an die Art der Warenstücke angepasst einstellen zu können.

Das Lagerelement kann begrenzt elastisch ausgebildet sein, etwa wie ein Drahtseil oder eine Drahtlitze. Es können aber auch starre Körper in Stabform als Lagerelement eingesetzt werden, die rechteckigen, quadratischen, polygonen oder auch kreisförmigen Querschnitt aufweisen können. Die Hohlwelle kann von innen auch durch mehrere Lagerelemente gelagert sein.

Zur Aufbringung der Zugspannung auf das Lagerelement ist eine Spanneinrichtung vorgesehen, die eine feinfühlige Einstellmöglichkeit der Zugspannung erbringt. Zusätzlich oder alternativ kann eine Feder vorgesehen sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Ausführungsformen der erfindungsgemäßen Vorrichtung sind in den Zeichnungen dargestellt und werden im Folgenden näher beschrieben. Es zeigen:
- **Fig. 1**: einen Vertikalschnitt durch zwei aneinander anschließende Förderbänder in Förderrichtung, also quer zur Arbeitsbreite,
- **Fig. 2**: eine schematisierte Draufsicht auf die Vorrichtung gemäß Fig. 1 mit Darstellung der wesentlichen Teile der Vorrichtung,
- **Fig. 3**: eine vergrößerte Darstellung der wesentlichen Elemente der Vorrichtung, ähnlich Fig. 1, und
- **Fig. 4**: eine ähnliche Darstellung wie Fig. 3 zur Verdeutlichung einer weiteren Ausführungsform.

### FIGURENBESCHREIBUNG

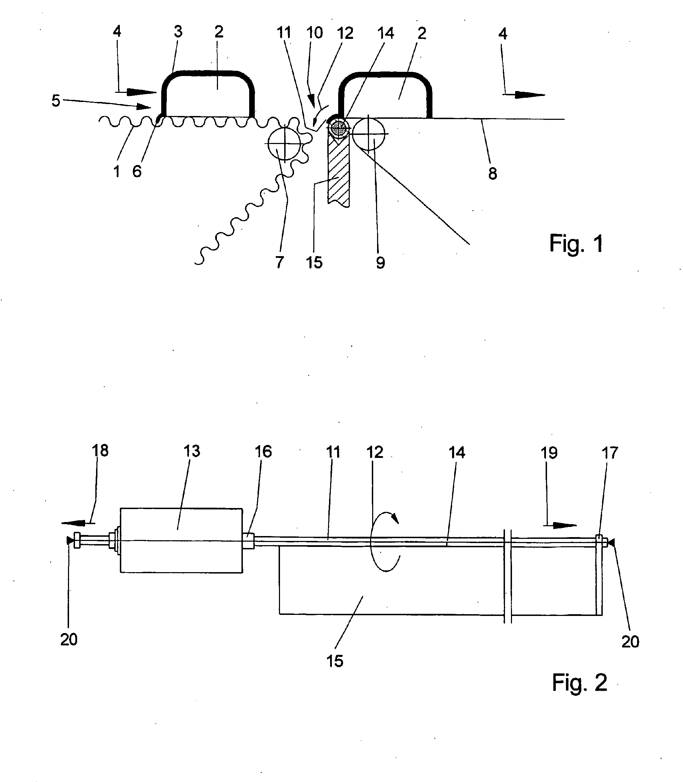

**Fig. 1** lässt die Übergangsstelle zwischen zwei aneinander anschließenden Förderbändern erkennen. Auf einem Förderband 1, welches in der Regel als Gitterband ausgebildet und übertrieben dargestellt ist, werden Warenstücke 2, die mit Masse 3 überzogen oder auch nur dekoriert sind, in Richtung des Pfeils 4 angeliefert. Pfeil 4 gibt damit auch die Umlaufrichtung des Förderbands 1 an. Das links in Fig. 1 dargestellte Warenstück 2, welches auf dem Förderband 1 herangeführt wird, lässt im hinteren Bodenbereich 5 einen Grat 6 erkennen, der mehr oder weniger in die Oberfläche des Gitterbands eingedrungen ist. Ähnliche Grate können über den Umfang des Warenstücks 2 vorgesehen sein, also auch im vorderen Bodenbereich und/oder seitlich. In der Regel bereiten diese Grate vergleichsweise weniger Probleme als die im hinteren Bodenbereich 5 vorgesehenen Grate. Das Förderband 1 wird an seinem Ende mit Hilfe einer Umlenkwalze 7 umgelenkt. Relativ zu dem Ende des Förderbands 1 ist ein weiteres nachgeschaltetes Förderband 8 vorgesehen, welches in gleicher Förderrichtung gemäß Pfeil 4 umlaufend angetrieben wird. Am Anfang des Förderbands 8 ist eine Umlenkwalze 9 vorgesehen. Damit wird zwischen den Förderbändern 1 und 8 ein Spaltbereich 10 geschaffen, über welchen die einzelnen Warenstücke 2 übertreten müssen. Dieser Spaltbereich 10 wird in bekannter Weise dazu genutzt, um von den Warenstücken 2 im hinteren Bodenbereich 5 schmelzflüssige Masse abzunehmen und so Grate 6, Schwänze und ähnliche Ausformungen nicht entstehen zu lassen, die nicht nur ein unschönes Aussehen hervorrufen würden, sondern auch die Weiterverarbeitung der Warenstücke 2 stören können. Wesentliches Element einer Vorrichtung, die im Spaltbereich 10 angeordnet wird, um überschüssige schmelzflüssige Masse 3 insbesondere im hinteren Bodenbereich 5 von Warenstücken abzunehmen, ist eine Hohlwelle 11, die umlaufend angetrieben wird. Der Antrieb kann entsprechend Pfeil 12 gegenläufig oder aber auch gleichläufig erfolgen. Der Antrieb erfolgt über einen Motor 13 (Fig. 2). Die Hohlwelle 11 ist innen, also in ihrem freien Querschnitt her, durch ein Lagerelement 14 abgestützt und gelagert. Auf diese Weise wird der freie Querschnitt der Hohlwelle 11 für die Lagerung genutzt, ohne dass dadurch der Außendurchmesser der Hohlwelle 11 vergrößert wird. Zwischen dem Lagerelement 14 und dem inneren Umfang der Hohlwelle 11 ist vorzugsweise lediglich das für die Relativbewegung erforderliche Spiel vorgesehen. Die Hohlwelle 11 kann mit relativ hohen Drehzahlen, beispielsweise in der Größenordnung von 2.000 bis 3.000 min⁻¹ angetrieben werden, während das Lagerelement 14 ortsfest angeordnet sein kann.

Die Oberfläche des Förderbands 8 liegt in einer Förderebene, die an die Förderebene des Förderbands 1 anschließt und auf der die Warenstücke 2 aufliegen. Die Hohlwelle 11 mit ihrem Lagerelement 14 kann relativ zu dieser gemeinsamen Förderebene höhenverstellbar angeordnet sein. Auch die Breite im Spaltbereich 10 kann einstellbar gewählt sein. Damit lässt sich der Abstand zwischen den beiden Umlenkwalzen 7 und 9 relativ zu dem Außendurchmesser der Hohlwelle 11 einstellen, und zwar bezogen auf die jeweilige Art und die Größe des Warenstücks 2.

Die Hohlwelle 11 und das Lagerelement 14 können in einer ersten Ausführungsform frei schwebend im Spaltbereich 10 angeordnet sein. Überschüssige Masse 3 in Form von Graten 6 wird von der Oberfläche der sich drehenden Hohlwelle 11 erfasst und damit im hinteren Bodenbereich 5 der Warenstücke 2 abgerissen, so dass eine regelmäßig begrenzte glatte Hinterkante an den Warenstücken 2 entsteht, wie es für die Weiterverarbeitung sinnvoll und erforderlich ist.

Es ist aber auch möglich, die Einheit aus Hohlwelle 11 und Lagerelement 14 zusätzlich auf einem Abstreifer 15 abzustützen. **Fig. 2** lässt den Abstreifer 15 in seiner Breite erkennen, die zugleich etwa die Arbeitsbreite der Vorrichtung wiedergibt. Im Bereich dieser Arbeitsbreite ist die Hohlwelle 11 nur durch das Lagerelement 14 abgestützt, welches von innen an der Hohlwelle 11 angreift und sich zumindest über die Arbeitsbreite, also etwa die Breite des Abstreifers 15 erstreckt. Darüber hinaus kann die Hohlwelle 11 außerhalb der Arbeitsbreite durch weitere Lager 16 und 17 abgestützt sein, die die Hohlwelle 11 außen umfassen und aufnehmen. Das Lagerelement 14 kann sich nicht nur über die Arbeitsbreite, sondern darüber hinaus über die gesamte Erstreckung der Vorrichtung (Fig. 2) erstrecken, also auch den Motor 13 durchsetzen. Das Lagerelement 14 wird zweckmäßig unter Zugspannung gehalten. Diese Zugspannung ist durch Pfeile 18 und 19 angedeutet. Die Zugspannung kann mit Hilfe einer Stelleinrichtung 20 aufgebracht werden. Auch die Einschaltung einer Feder (nicht dargestellt) ist an dieser Stelle möglich.

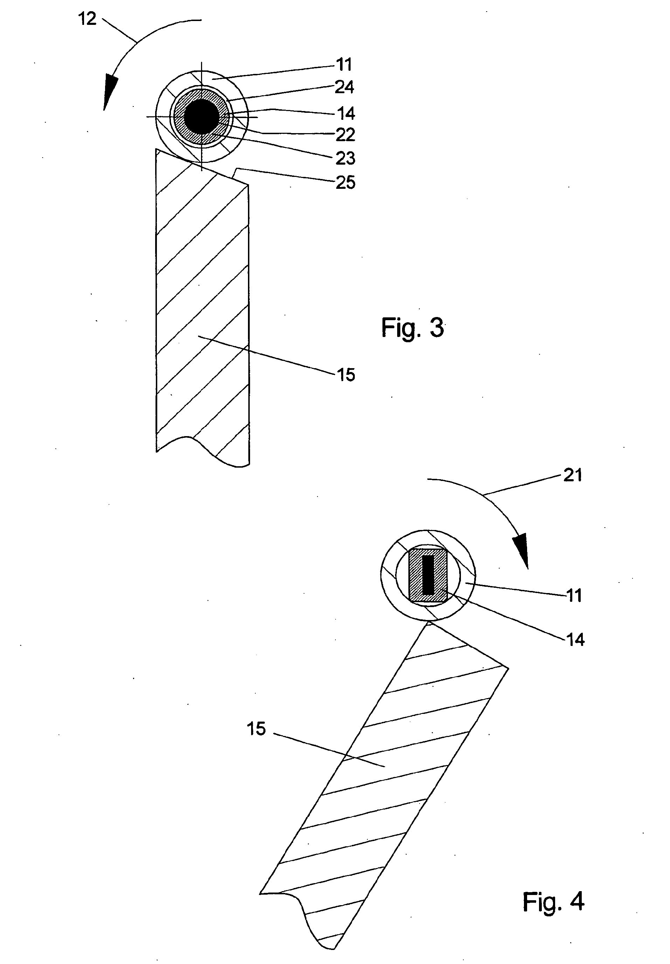

Anhand der **Fig. 3 und 4** sind weitere Ausführungsmöglichkeiten der Hohlwelle 11 und des Lagerelements 14 dargestellt, und zwar jeweils relativ zu einem Abstreifblech 15. Das Abstreifblech 15 kann im Wesentlichen vertikal ausgerichtet angeordnet sein, an seinem oberen Endbereich ein Prisma aufweisen (Fig. 1) oder auch in einer sonstigen Ausbildung und Relativlage zu der Hohlwelle 11 vorgesehen sein. Die Hohlwelle 11 selbst wird entweder gegenläufig gemäß Pfeil 12 oder gleichläufig gemäß Pfeil 21 umlaufend angetrieben. In letzterem Fall kann die Hohlwelle 11 auch zur Erbringung einer Förderfunktion mit herangezogen werden.

Bei dem Ausführungsbeispiel der **Fig. 3** wird im Innenraum der Hohlwelle 11 ein Lagerelement 14 eingesetzt, welches einen Kern 22 und eine Umwicklung 23 aufweist. Die Umwicklung 23 ist so dimensioniert, dass lediglich hinreichend Spiel 24 zu der inneren Oberfläche der Hohlwelle 11 resultiert, wie es für die Drehbewegung erforderlich ist. Der Abstreifer 15 weist auf seiner der Hohlwelle 11 zugekehrten Seite eine schräg gestellte Auflagefläche 25 auf.

Bei dem Ausführungsbeispiel der **Fig. 4** wird ein Lagerelement 14 eingesetzt, welches etwa rechteckigen Querschnitt mit abgerundeten Ecken aufweist. Auch ein polygonaler Querschnitt könnte hier Anwendung finden. Die Bemessung ist auch wieder unter Schaffung des zuvor erwähnten Spiels 24 durchgeführt. Diese Ausführungsform hat den Vorteil, dass die entstehende Reibung zwischen Lagerelement 14 und Hohlwelle 11 sehr gering ist.

Aus **Fig. 4** ist auch die relative Anordnung der Hohlwelle 11 und des Abstreifblechs 15 erkennbar. Es ist hier eine Positionierung gewählt, bei der eine Ecke des Abstreifblechs 15 die erwünschte kontinuierliche Säuberungswirkung auf die Oberfläche der Hohlwelle 11 ausübt.

### BEZUGSZEICHENLISTE

- 1: Förderband
- 2: Warenstück
- 3: Masse
- 4: Pfeil
- 5: Bodenbereich
- 6: Grat
- 7: Umlenkwalze
- 8: Förderband
- 9: Umlenkwalze
- 10: Spaltbereich

- 11: Hohlwelle
- 12: Pfeil
- 13: Motor
- 14: Lagerelement
- 15: Abstreifer
- 16: Lager
- 17: Lager
- 18: Pfeil
- 19: Pfeil
- 20: Stelleinrichtung

- 21: Pfeil
- 22: Kern
- 23: Umwicklung
- 24: Spiel
- 25: Auflagefläche

## Patentansprüche

1. Vorrichtung zum Entfernen von schmelzflüssiger Masse, insbesondere Schokolademasse, im hinteren Bodenbereich (5) von Warenstücken (2), mit einer in einem Spaltbereich (10) im Anschluss an eine Umlenkwalze (7, 9) eines Förderbandes (1, 8) über die Arbeitsbreite reichenden, angetriebenen Welle zum Entfernen der schmelzflüssigen Masse, **dadurch gekennzeichnet, dass** die Welle als Hohlwelle (11) ausgebildet ist, die im Bereich der Arbeitsbreite von innen gelagert ist.

2. Vorrichtung nach Anspruch 1, **dadurch gekennzeichnet, dass** die als Hohlwelle (11) ausgebildete Welle zum Entfernen der schmelzflüssigen Masse im Spaltbereich (10) zwischen zwei aneinander anschließenden Förderbändern (1, 8) gelagert ist.

3. Vorrichtung nach Anspruch 1 oder 2, **dadurch gekennzeichnet, dass** im freien Querschnitt der Hohlwelle (11) ein Lagerelement (14) angeordnet ist, das sich zumindest über die Arbeitsbreite durch den freien Querschnitt der Hohlwelle (11) hindurcherstreckt.

4. Vorrichtung nach Anspruch 3, **dadurch gekennzeichnet, dass** das Lagerelement (14) ortsfest angeordnet ist und dass zwischen dem Lagerelement (14) und der Hohlwelle (11) ein für die Drehbewegung der Hohlwelle (11) erforderliches Spiel (24) vorgesehen ist.

5. Vorrichtung nach Anspruch 3 oder 4, **dadurch gekennzeichnet, dass** das Lagerelement (14) unter Zugspannung gehalten ist.

6. Vorrichtung nach einem der Ansprüche 1 bis 5, **dadurch gekennzeichnet, dass** als Lagerelement (14) ein Lagerstab, ein Draht oder ein Drahtseil, jeweils aus Metall und/oder Kunststoff vorgesehen ist.

7. Vorrichtung nach einem der Ansprüche 1 bis 6, **dadurch gekennzeichnet, dass** unter der Hohlwelle (11) ein etwa vertikal ausgerichtetes, beheiztes Abstreifblech (15) angeordnet ist, auf dem die Hohlwelle (11) zusätzlich abgestützt ist und welches die Hohlwelle (11) von der übernommenen Masse (3) reinigt.

8. Vorrichtung nach einem der Ansprüche 1 bis 7, **dadurch gekennzeichnet, dass** die Hohlwelle (11) mit ihrem Lagerelement (14) höhenverstellbar gelagert ist.

9. Vorrichtung nach einem der Ansprüche 1 bis 8, **dadurch gekennzeichnet, dass** das Lagerelement (11) begrenzt elastisch ausgebildet ist.

10. Vorrichtung nach einem der Ansprüche 1 bis 9, **dadurch gekennzeichnet, dass** zur Aufbringung der Zugspannung auf das Lagerelement (14) eine Feder vorgesehen ist.

## Claims

1. Apparatus for removing molten mass, especially chocolate mass, from a rear bottom portion (5) of items (2), comprising a shaft, the shaft being arranged in a gap region (10) downstream a deflecting roller (7, 9) of a conveyor belt (1, 8) and being designed and arranged to be driven to rotate in a way to remove the molten mass, **characterized in that** the shaft is designed as a hollow shaft (11), the shaft being designed and arranged to be supported from inside and within the working width.

2. The apparatus of claim 1, **characterized in that** the shaft to remove the molten mass being a hollow shaft (11) is arranged in the gap region (10) between two conveyor belts (1, 8) following each other in the conveying direction.

3. The apparatus of claim 1 or 2, **characterized in that** a supporting element (14) is arranged in a free cross-section of the hollow shaft (11), the supporting element being designed and arranged to at least extend over the working width through the free cross-section of the hollow shaft (11).

4. The apparatus of claim 3, **characterized in that** the supporting element (14) is designed to be stationary and **in that** there is a clearance (24) between the supporting element (14) and the hollow shaft (11), the clearance allowing for the rotational movement of the hollow shaft (11).

5. The apparatus of claim 3 or 4, **characterized in that** the supporting element (14) is designed and arranged to be subjected to tensile stress.

6. The apparatus of one of the claims 1 to 5, **characterized in that** the supporting element is designed as an element selected from the group consisting of a bearing rod, a wire and a wire cable being made of at least one material selected from the group consisting of metal and/or plastic.

7. The apparatus of one of the claims 1 to 6, **characterized in that** a stripper sheet metal (15) is arranged below the hollow shaft (11), the stripper sheet metal being located approximately vertical and being designed and arranged to additionally support the hollow shaft and to remove the mass (3) from the hollow shaft (11).

8. The apparatus of one of the claims 1 to 7, **characterized in that** the hollow shaft (11) and the supporting element (14) are designed and arranged to be height adjustable.

9. The apparatus of one of the claims 1 to 8, **characterized in that** the supporting element (14) is designed to be resilient as to limited manner.

10. The apparatus of one of the claims 1 to 9, **characterized in that** a spring is designed and arranged to apply the tensile stress to the supporting element (14).

## Revendications

1. Dispositif pour l'élimination d'une masse fondue, notamment une masse de chocolat, à la partie arrière de la base (5) de produits (2) avec un arbre entraîné dans la zone d'un intervalle (10) en liaison avec le tambour de renvoi (7, 9) d'une bande transporteuse (1, 8) et s'étendant sur la largeur de travail, pour éliminer les masses fondues **caractérisé en ce que** l'arbre est réalisé comme un arbre creux (11) qui est monté dans la zone de la largeur de travail depuis l'intérieur.

2. Dispositif selon la revendication 1, **caractérisé en ce que** l'arbre, réalisé comme un arbre creux (11), est monté dans la zone d'intervalle (10) entre deux bandes transporteuses (1, 8) se faisant suite pour éliminer la masse fondue.

3. Dispositif selon la revendication 1 ou 2, **caractérisé en ce qu'**un élément de palier (14) est disposé dans la section libre de l'arbre creux (11), et s'étend, au moins sur la largeur de travail, à travers la section libre de l'arbre creux (11).

4. Dispositif selon la revendication 3, **caractérisé en ce que** l'élément de palier (14) est monté fixe et **en ce qu'**un jeu (24) est prévu entre l'élément de palier (14) et l'arbre creux (11) nécessaire pour permettre la rotation de l'arbre creux (11).

5. Dispositif selon la revendication 3 ou 4, **caractérisé en ce que** l'élément de palier (14) est précontraint en traction.

6. Dispositif selon les revendications 1 ou 5, **caractérisé en ce que** comme élément de palier (14) on prévoit une barre, un fil, ou un câble, chaque fois en métal et/ou en matière plastique.

7. Dispositif selon, **caractérisé en ce que** sous l'arbre creux (11) est placée une tôle de raclage (15) chauffée disposée à peu près verticalement, sur laquelle l'arbre creux (11) vient aussi en appuie et qui nettoie l'arbre creux (11) de masse excédentaire (3).

8. Dispositif selon l'une des revendications 1 à 7, **caractérisé en ce que** l'arbre creux (11) est monté de façon à pouvoir être réglé en hauteur au moyen de son élément de palier (14).

9. Dispositif selon l'une des revendications 1 à 8, **caractérisé en ce que** l'élément de palier (14) est réalisé avec une élasticité limitée.

10. Dispositif selon l'une des revendications 1 à 9, **caractérisé en ce qu'**un ressort est prévu pour exercer la précontrainte en traction sur l'élément de palier (14).
